# EUROPÄISCHE PATENTSCHRIFT

(11) **EP 1 249 099 B1**
(45) Veröffentlichungstag und Bekanntmachung des Hinweises auf die Patenterteilung: **18.04.2007**
(21) Anmeldenummer: 00991122.3
(22) Anmeldetag: 23.12.2000
(51) Int. Cl.: H04L 12/40, H04J 3/06

(54) **VERFAHREN UND VORRICHTUNG ZUM AUSTAUSCH VON DATEN ZWISCHEN WENIGSTENS ZWEI MIT EINEM BUSSYSTEM VERBUNDENEN TEILNEHMERN**
METHOD AND DEVICE FOR THE EXCHANGE OF DATA BETWEEN AT LEAST TWO USERS LINKED BY MEANS OF A BUS SYSTEM
PROCEDE ET DISPOSITIF D'ECHANGE DE DONNEES ENTRE AU MOINS DEUX ABONNES RELIES PAR UN SYSTEME DE BUS

(30) Priorität: 05.01.2000 DE 10000302
(43) Veröffentlichungstag der Anmeldung: 16.10.2002
(73) Patentinhaber: ROBERT BOSCH GMBH, 70442 Stuttgart (DE)
(72) Erfinder: WEIGL, Andreas, 76351 Linkenheim-Hochstetten (DE); FUEHRER, Thomas, 70839 Gerlingen (DE); MUELLER, Bernd, 71229 Leonberg (DE); HARTWICH, Florian, 72762 Reutlingen (DE); HUGEL, Robert, 76199 Karlsruhe (DE); BAEUERLE, Peter, 71636 Ludwigsburg (DE)
(86) Internationale Anmeldenummer: PCT/DE2000/004653
(87) Internationale Veröffentlichungsnummer: WO 2001/050677

(56) Entgegenhaltungen:
- WO-A-98/54872
- DE-A- 19 620 137
- US-A- 5 742 239

## Beschreibung

### Stand der Technik

Die Erfindung betrifft Verfahren und Vorrichtung zum Austausch von Daten zwischen wenigstens zwei mit einem Bussystem verbundenen Teilnehmern gemäß den Merkmalen der unabhängigen Ansprüche.

Als Stand der Technik in der automobilen Vernetzung wird seit einigen Jahren das CAN-Protokoll eingesetzt. Die Kommunikation ist dort ereignisgesteuert geregelt. Sehr große Lasten können erzeugt werden, wenn das Senden verschiedener Nachrichten zur gleichen Zeit initiiert werden soll. Der nicht-destruktive Arbitrierungsmechanismus von CAN garantiert, daß sequentielle Senden aller Nachrichten gemäß der Priorität ihrer Identifier bzw. Kennungen. Für harte Echtzeitsysteme muß vorab eine Analyse der Laufzeiten und Buslasten für das gesamte System gemacht werden, um sicher zu gehen, daß alle Nachrichten-Deadlines eingehalten werden können (selbst unter Spitzenbelastung).

Es gibt bereits Kommunikationsprotokolle, die auf einer zeitgesteuerten Abarbeitung basieren, wie z.B. TTP/C oder Interbus-S. Die Besonderheit hierbei ist, daß der Buszugriff bereits vorab durch Vergabe von Sendezeitpunkten geplant wird. Während der Laufzeit kann es somit zu keinen Kollisionen kommen. Ebenso wird aber eine Spitzenlast am Kommunikationsbus vermieden. Dabei ist der Bus also häufig nicht vollständig ausgelastet.

Zeitlich determinierte Kommunikationssysteme lassen einen vorherbestimmbaren Ablauf der Prozesse zu. Es ist deshalb möglich, die Applikation mit der Kommunikation in einem engeren Zeitbereich als in einem arbitrierenden System zu synchronisieren. Bei einer rein zyklisch ablaufenden Kommunikation ist aber die Applikation starr an das zeitliche Raster gebunden, wohingegen bei bestimmten Betriebsabläufen, insbesondere der Motorsteuerung in einem Fahrzeug, eine zeitlich veränderliche Nachrichten- bzw. Datenübertragung, insbesondere der Messwerte angepasst an die Drehzahl, nötig ist.

Dazu zeigt die WO 98/54872 A ein Verfahren zum Austausch von Daten in Nachrichten zwischen zwei Teilnehmern, welche über ein Bussystem verbunden sind, wobei die Nachrichten durch einen Teilnehmer dadurch zeitlich gesteuert werden, dass dieser Teilnehmer wiederholt eine Referenznachricht in vorgegebenem zeitlichen Abstand am Beginn eines Nachrichtenübertragungszyklus sendet.

Es ist Aufgabe der Erfindung die Flexibilität, insbesondere im Hinblick auf Unterbrechungen bei einer derartigen zeitlichen Steuerung zu erhöhen.

### Vorteile der Erfindung

Die Erfindung beinhaltet somit ein Verfahren und eine Vorrichtung zum Austausch von Daten in Nachrichten zwischen wenigstens zwei Teilnehmern, welche mittels eines Bussystems verbunden sind, wobei die, die Daten enthaltenden Nachrichten durch die Teilnehmer über das Bussystem übertragen werden und die Nachrichten durch einen ersten Teilnehmer zeitlich derart gesteuert werden, dass der erste Teilnehmer wiederholt eine Referenznachricht in wenigstens einem vorgebbaren zeitlichen Abstand über den Bus überträgt und der zeitliche Abstand in Zeitfenster vorgebbarer Länge unterteilt wird, wobei die Nachrichten in den Zeitfenstern übertragen werden, wobei eine Referenznachricht und die nachfolgenden Zeitfenster bis zur nächsten Referenznachricht zu einem von mehreren ersten Zyklen zusammengefaßt werden und der erste Teilnehmer durch eine Stop-Anforderung, insbesondere eine Nachricht des wenigstens zweiten Teilnehmers, die Übertragung am Ende eines dieser ersten Zyklen unterbricht.

Dabei wird als zugrundeliegendes Bussystem bzw. Busprotokoll insbesondere zweckmässigerweise der CAN-Bus eingesetzt. Die Erfindung bezieht sich aber allgemein auf jedes Bussystem bzw. Busprotokoll bei welchem eine objektorientierte Nachrichten- bzw. Datenübertragung eingesetzt wird, also die Nachricht und/oder die darin enthaltenen Daten durch eine Kennung (Identifier) eindeutig erkennbar sind. Dies gilt für alle Busse bei denen also nicht die Teilnehmer sondern die Nachrichten bzw. deren Daten adressiert werden, insbesondere den CAN-Bus.

Die Erfindung umfaßt vorteilhafterweise somit gegenüber dem Stand der Technik eine höhere Protokollschicht zu dem eigentlichen Bus(CAN)-Protokoll, das im Rahmen der erfindungsgemäßen zeitgesteuerten Kommunikation unverändert erhalten bleibt. Die zeitgesteuerte Kommunikation erlaubt es somit vorteilhafterweise, den Bus voll auszulasten und gleichzeitig die Latenzzeiten für jede Nachricht auf einem definierten Wert zu halten.

Die Erfindung umfaßt also eine zyklisch ablaufende Übertragung von Bus(CAN)-Nachrichten. Dadurch wird ein deterministisches und zusammensetzbares Kommunikationssystem erzeugt. Ein solches System wird bei dieser Erfindung im Weiteren als TTCAN bezeichnet. Ebenso wird im Weiteren von einem CAN-Bus ausgegangen, wobei wie oben genannt die Überlegungen allgemein für alle Bussysteme bzw. Busprotokolle mit objektorientierter Nachrichtenübertragung gelten.

Zweckmäßigerweise werden also die Referenznachricht und die nachfolgenden Zeitfenster bis zur nächsten Referenznachricht zu einem ersten Zyklus vorgebbarer Länge und/oder vorgebbarer Struktur zusammengefasst, wobei die Struktur der Länge, Anzahl und zeitlichen Position der auf die Referenznachricht folgenden Zeitfenster in dem zeitlichen Abstand entspricht.

Weiterhin werden vorteilhafterweise mehrere erste Zyklen gleicher Struktur zu einem zweiten Zyklus zusammengefasst, wobei in dem zweiten Zyklus auch Nachrichten in Zeitfenstern wiederholt übertragen werden, deren zeitlicher Abstand größer ist als die zeitliche Länge des ersten Zyklus.

Zweckmässigerweise kann in wenigstens einem Zeitfenster des ersten oder des zweiten Zyklus eine zyklische Nachrichtenübertragung unterbleiben. In diesen zunächst leeren Zeitfenstern können dann arbitrierende Nachrichten übertragen werden, also solche, die nicht zyklisch übertragen werden müssen sondern wenn z.B. bestimmte Abläufe beendet sind zur Verfügung stehen.

Vorteilhafterweise leitet der erste Teilnehmer bei einer Start-Anforderung, insbesondere durch den zweiten Teilnehmer, einen ersten Zyklus ein.

Weiterhin von Vorteil ist, dass die Stop-Anforderung und/oder die Start-Anforderung von einer bezüglich des Bussystems externen Vorrichtung erfolgt, welche zu diesem Zweck mit dem ersten Teilnehmer in Verbindung steht.

In einer vorteilhaften Ausführungsform wird der wenigstens zweite Teilnehmer oder die externe Vorrichtung zur Applikation eingesetzt.

Somit wird vorteilhafterweise ein zeitlich determinierter Kommunikationsablauf mit externen Ereignissen der Applikation abgestimmt. Beispielhaft sei hier die winkelsynchrone Verarbeitung der Meßwerte in der Motorsteuerung, die über ein zeitgesteuertes Kommunikationssystem erfaßt werden, genannt.

Zeitlich determinierte Kommunikationssysteme lassen einen vorherbestimmbaren Ablauf der Prozesse zu. Es ist deshalb möglich, die Applikation mit der Kommunikation in einem engeren Zeitbereich als in einem arbitrierenden System zu synchronisieren. Bei einer rein zyklisch ablaufenden Kommunikation ist aber die Applikation starr an das zeitliche Raster gebunden. Im Falle des Beispiels einer Motorsteuerung sind hingegen zeitlich veränderliche, der Dynamik der Drehzahländerung angepaßte Meßwertübertragungen nötig. Dies kann vorteilhafterweise erreicht werden, indem der zyklische Kommunikationsablauf unterbrechbar ist und auf ein externes Ereignis hin definiert wieder gestartet werden kann.

Weiterhin von Vorteil ist die schnelle Erkennung von ausgefallenen Teilnehmern bzw. Knoten (Applikation erwartet Botschaften in einem festen Zeitbezug zum Ereignis)

Weitere Vorteile und vorteilhafte Ausgestaltungen ergeben sich aus der Beschreibung und den Merkmalen der Ansprüche.

### Zeichnung

Die Erfindung wird nachfolgend anhand der in der Zeichnung enthaltenen Figuren dargestellt.

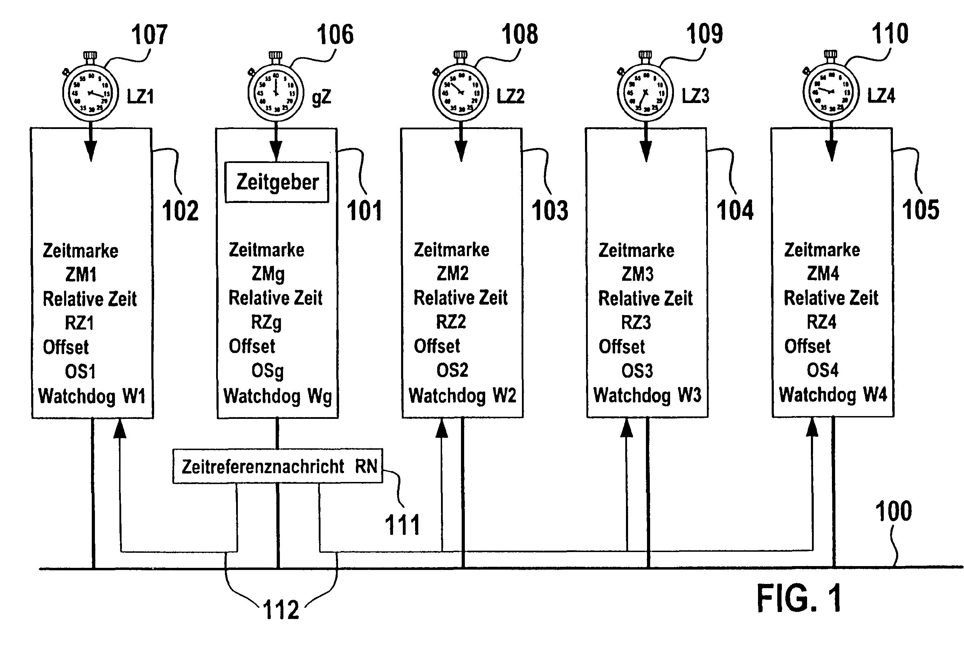

Dabei zeigt Figur 1 schematisch ein Bussystem mit mehreren Teilnehmern.

In Figur 2 ist der prinzipielle Ablauf der ersten Zyklen oder Basiszyklen und der zweiten Zyklen, der Gesamtzyklen über der Zeit dargestellt.

Figur 3 veranschaulicht im Detail die Anlage und Nachrichtenbelegung der Zeitfenster.

In Figur 4 wird dann ein Gesamtzyklus mit 7 Basiszyklen und diversen Sendegruppen der Nachrichten sowie arbitrierender Nachrichten dargestellt.

Figur 5 zeigt in einer Gegenüberstellung eine zyklische Nachichtenübertragung gemäß den Figuren 2 und 4 und die ereignissynchronisiertezyklische Nachrichtenübertragung.

### Beschreibung der Ausführungsbeispiele

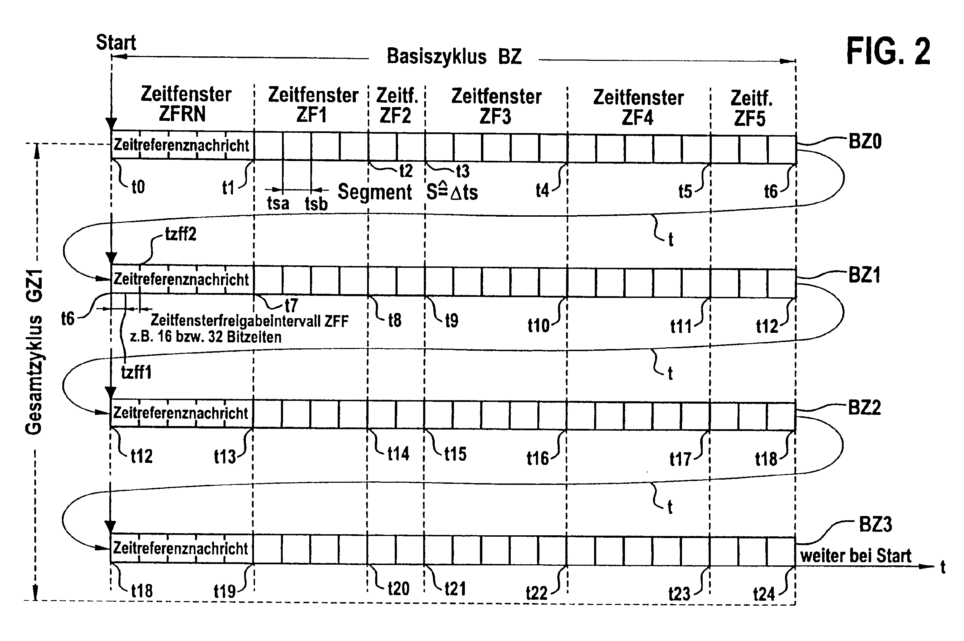

TTCAN basiert im wesentlichen auf einer zeitgesteuerten, periodischen Kommunikation, die durch einen Zeitgeber (Knoten, Teilnehmer) mit Hilfe einer Zeitreferenznachricht, oder kürzer Referenznachricht RN getaktet wird. Die Periode bis zur nächsten Referenznachricht RN wird als Basiszyklus bezeichnet und unterteilt sich in n Zeitfenster (siehe Figur 2). Jedes Zeitfenster erlaubt das exklusive Senden einer periodischen Nachricht mit unterschiedlicher Länge. Diese periodischen Nachrichten werden in einem TTCAN-Controller durch Verwendung von Zeitmarken, die mit dem Ablauf einer logischen relativen Zeit gekoppelt sind, gesendet. TTCAN erlaubt aber auch die Berücksichtigung von freien Zeitfenstern. Diese Zeitfenster können für sogenannte spontane Nachrichten genutzt werden, wobei der Zugriff innerhalb dieser Zeitfenster auf den Bus über das Arbitrierungsschema von CAN genutzt wird (arbitrierende Nachrichten). Die Synchronisation der Zeitgeber-Uhr (Globale Zeit gZ) mit der internen lokalen Zeit der einzelnen Knoten 1Z1 bis 1Z4 wird berücksichtigt und effizient umgesetzt.

Figur 1 zeigt ein Bussystem 100 mit mehreren Busteilnehmern 101 bis 105. Jeder Teilnehmer 101 bis 105 besitzt dabei eine eigene Zeitbasis 106 bis 110, die einerseits durch ein interners Mittel, wie eine Uhr, Zähler, Taktgenerator, etc.oder extern zu dem jeweiligen Teilnehmer übertragen werden kann. Die jeweilige lokale Zeitbasis 1Z1 bis 1Z4 ist insbesondere ein Zähler, z.B. 16-bit aufwärtszählend, der lediglich durch einen HW-Reset beeinflußt werden darf. Die lokale Zeitbasis ist hier in jedem Knoten bzw. Teilnehmer 102 bis 105 implementiert. Ein Teilnehmer, der Zeitgeber, 101 besitzt dabei ein exponierte Stellung. Seine Zeitbasis wird als globale Zeitbasis 106 mit der globalen Zeit gZ bezeichnet und ist entweder in dem Zeitgeber 101 implementiert oder wird extern an diesen übertragen. Die globale Zeit gZ wird prinzipiell in jedem Knoten aus der lokalen Zeitbasis 107 bis 110 bzw. der lokalen Zeit 1Z (1Z1 bis 1Z4) und einem Offset OS1 bis OS4 gebildet. Dieser Offset Osg beim Zeitgeber 101 ist in der Regel gleich Null (Osg = 0). Alle anderen Knoten bilden ihre Sicht auf die globale Zeit gZ aus der lokalen Zeit lZ (lZ1 bis lZ4) und dem lokalen Offset OS1 bis OS4 und OSg wenn OSg ≠ 0. Der Fall, dass OSg nicht Null ist, tritt z.B. auf wenn die globale Zeit gZ von aussen an den Zeitgeber 101 übertragen wird, und dieser zusätzlich eine eigene Zeitbasis 106 enthält. Dann wird auch der Zeitgeber auf die globale Zeit gZ geeicht und gZ und die Zeitbasis 106 stimmen eventuell nicht überein. Der lokale Offset ist die Differenz zwischen der lokalen Zeit zum Sendezeitpunkt (SOF, Start Of Frame) der Referenznachricht und der vom Zeitgeber in dieser Referenznachricht übertragenen Globalen Zeit.

Lokale Zeitbasis und die Globale Zeit
Lokale Zeitbasis: Die lokale Zeitbasis ist ein Zähler, z.B. 16-bit aufwärtszählend, der lediglich durch einen HW-Reset beeinflußt werden darf. Die lokale Zeitbasis ist in jedem Knoten implementiert.
Referenzmarken Zwischenregister: Bei jedem angenommenen SOF wird das Zwischenregister mit der lokalen Zeitbasis geladen.
Referenzmarker: Wird die aktuelle Nachricht als Referenznachricht erkannt, dann wird der Wert aus dem Zwischenregister in den Referenzmarker übernommen (als lokale Referenzmarke). Der Referenzmarker wird z.B. als 16-Bit Register ausgelegt.
Zeitgeber-Referenzmarke: Das ist die von den Zeitnehmern empfangene Referenzmarke des Zeitgebers in der Referenznachricht.
Lokaler Offset zur Globalen Zeit: Der lokale Offset zur Globalen Zeit ist die Differenz zwischen der Referenzmarke im Zwischenregister und der in der Referenznachricht empfangenen Globalen Zeitmarke. Er wird zur Berechnung der Globalen Zeit aus der lokalen Zeit verwendet.
Der Offset des Zeitgebers selbst bleibt konstant. In der Referenznachricht sendet der Zeitgeber seine lokale Referenzmarke plus lokalem Offset.

Der Zeitgeber 101 ist also auch derjenige Knoten bzw. Teilnehmer, der die Zeitreferenznachricht 111 bzw. kürzer die Referenznachricht RN aussendet. Der Pfeil 112 zeigt an, dass die Referenznachricht RN 111 an die übrigen Teilnehmer 102 bis 105, insbesondere zeitgleich, versendet wird.

Die Referenznachricht RN ist die Basis für den zeitgesteuerten, periodischen Betrieb von TTCAN. Sie ist durch einen speziellen Identifier, eine spezielle Kennung, eindeutig gekennzeichnet und wird von allen Knoten, hier 102 bis 105, als Taktgeber empfangen. Sie wird von dem Zeitgeber 101 prinzipiell zyklisch ausgesendet. Die Referenznachricht kann folgende Daten beinhalten: Die Nummer des aktuellen Basiszyklus BZn, die Referenzmarke des Zeitgebers in Globaler Zeit.

Die Referenzmarke entsteht durch die Übernahme des internen Zählerstandes zum Zeitpunkt des "Start of Frame"-Bits (SOF) beim Empfang der Referenznachricht des Zeitgebers. Die Referenzmarke ist somit eine Momentaufnahme der lokalen Zeitbasis zum Empfangszeitpunkt der Referenznachricht.
Die in den Teilnehmern aufgeführte Relative Zeit RZ1 bis RZ4 und RZg ist die Differenz zwischen der lokalen Zeitbasis und der letzten Referenzmarke. Alle Definitionen bezüglich der verwendeten Zeitmarken beziehen sich auf die Relative Zeit eines einzelnen Teilnehmers. Sie kann z.B. permanent als Signal vorliegen (z.B. durch Verknüpfung der beiden Registerwerte über Gatter). Die Referenzmarke bestimmt die Relative Zeit aller Knoten am TTCAN-Bus.

Der ebenfalls dargestellte Wartchdog Wg und W1 bis W4 ist ein spezieller relativer Zeitpunkt. In jedem Knoten wird ein solcher relativer Zeitpunkt (Watchdog) definiert, zu dem spätestens eine neue Referenznachricht und somit auch Referenzmarke erwartet wird. Der Watchdog stellt somit eine spezielle Zeitmarke dar. Der Watchdog dient vor allem in der Initialisierung und Reinitialisierung zur Überwachung, ob überhaupt eine Kommunikation zustande gekommen ist. Der Watchdog sollte in diesem Fall immer größer sein als der Abstand zwischen den Referenznachrichten.

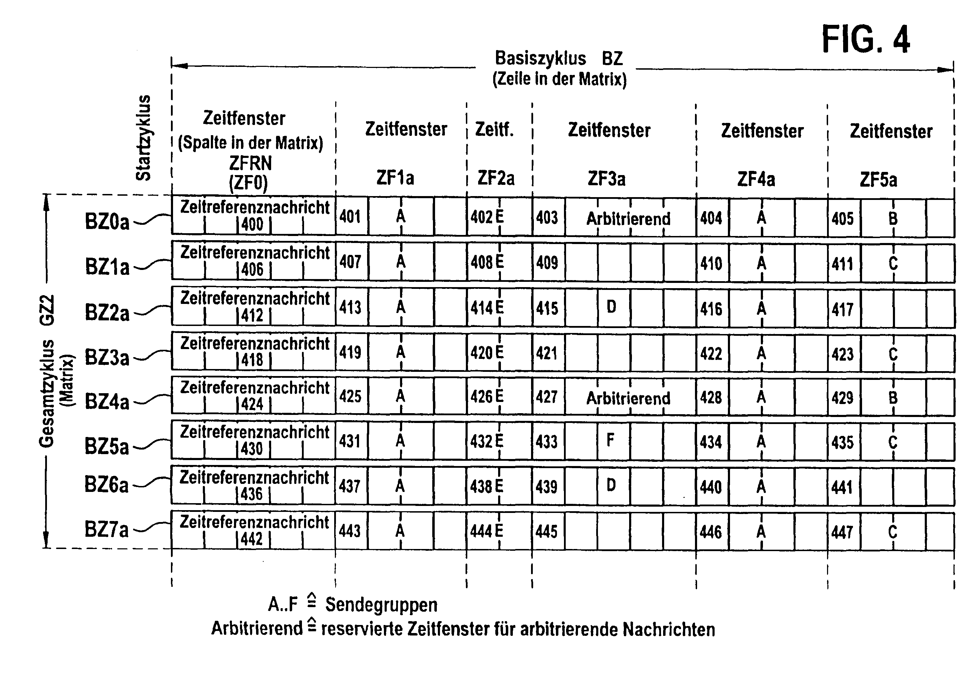

Dabei ist Eine Zeitmarke ein relativer Zeitpunkt, der die Beziehung zwischen der Relativen Zeit und einer Aktion im ursprünglichen Bus(CAN)-Controller herstellt. Eine Zeitmarke ist als Register dargestellt, wobei ein Controller mehrere Zeitmarken verwalten kann. Einer Nachricht können mehrere Zeitmarken zugeordnet sein (siehe z.B. in Figur 4: Sendegruppe A kommt sowohl in Zeitfenster ZF1a, als auch in Zeitfenster ZF4a vor).

Bezüglich der Applikation wird insbesondere ein Applikationswatchdog bedient. Dieser Watchdog muß von der Applikation regelmäßig bedient werden, um dem TTCAN-Controller den ordnungsgemäßen Betrieb zu signalisieren. Nur wenn dieser Watchdog bedient wird, werden die Nachrichten vom CAN-Controller gesendet.

Figur 2 zeigt das Prinzip der zeitgesteuerten, periodischen Nachrichten- bzw. Datenübertragung über der Zeit. Diese Nachrichtenübertragung wird durch den Zeitgeber mit Hilfe der Referenznachricht getaktet. Der Zeitraum t0 bis t6 wird dabei als Basiszyklus BZ bezeichnet und in k Zeitfenster (k ∈ 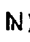 ) unterteilt. Dabei werden von t0 bis t1, t6 bis t7, t12 bis t13 und t18 bis t19 also im Zeitfenster ZFRN die Referenznachrichten RN der jeweiligen Basiszyklen BZ0 bis BZ3 übertragen. Die Struktur der einer Referenznachricht RN nachfolgenden Zeitfenster ZF1 bis ZF5, also deren Länge (in Segmenten S mit Δts = tsb - tsa), deren Anzahl und deren zeitlichen Position, ist vorgebbar. Dadurch lässt sich aus mehreren Basiszyklen gleicher Struktur ein Gesamtzyklus GZ1 bilden, der bei t0 beginnt und bei t24 endet um erneut durchlaufen zu werden. Die Zeitfenster umfassen z.B. 2 bis 5 Segmente mit beispeilsweise je 32 Bitzeiten. Die Anzahl der Zeitfenster ist beispielsweise 2 bis 16, wobei auch nur ein Zeitfenster oder mehr als 16 möglich wären. Die Anzahl der Basiszyklen in einem Gesamtzyklus ist beispielsweise 2^{m} mit insbesondere m ≤ 4.

Mit tzff1 und tzff2 sind beispielhaft zwei Sendefreigabeintervalle bzw. Zeitfensterfreigabeintervalle gekennzeichnet, welche z.B. 16 oder 32 Bitzeiten dauern und den Zeitrahmen beschreiben innerhalb dessen mit dem Senden der Nachricht bezüglich des Basiszyklus begonnen werden darf.

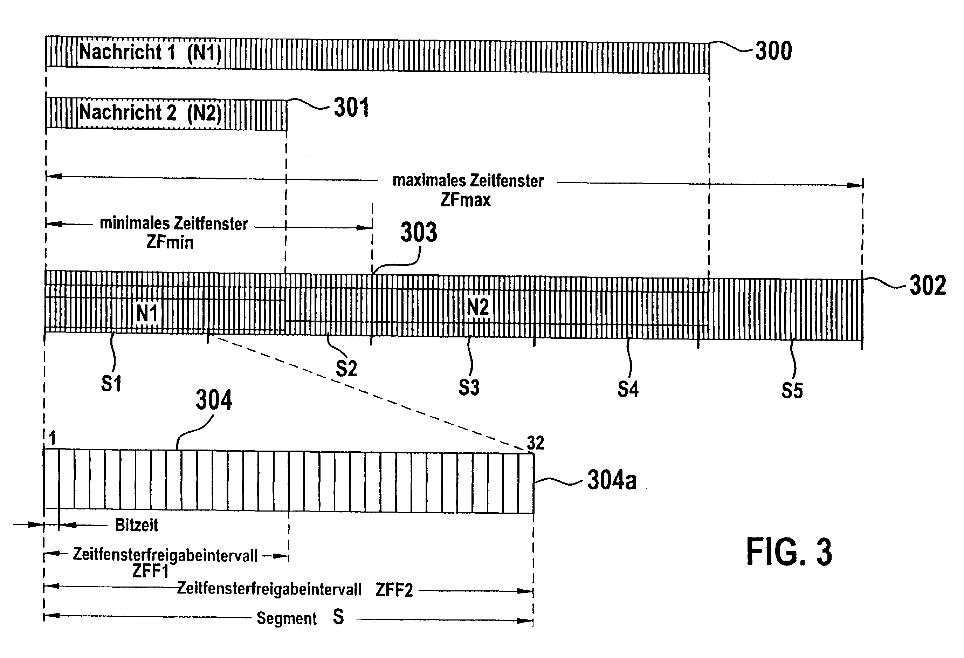

Jedes Zeitfenster erlaubt das exklusive Senden einer periodischen Nachricht mit unterschiedlicher Länge. In Figur 3 sind beispielhaft zwei Nachrichten unterschiedlicher Länge und die Zuordnung im Zeitfenster dargestellt. Nachricht 1 (N1) als Block 300 beinhaltet z.B. 130 Bit und Nachricht 2 (N2) als Block 301 beispielsweise 47 Bit.

Wie schon erwähnt können maximale und minimale Zeitfenster, abhängig von der Nachrichtenlänge vorgegeben werden, hier in diesem Beispiel z.B. zwischen 2 und 5 Segmenten pro Zeitfenster. Somit wird ein maximales Zeitfenster ZFmax als Block 302, das 5 Segmente (S1 bis S5) mit je 32 Bitzeiten umfasst und ein minimales Zeitfenster ZFmin als Block 303, welches 2 Segmente (S1 und S2) mit je 32 Bitzeiten umfasst vorgegeben. In diesen werden die Nachrichten N1 und N2 übertragen, wobei die Nachrichten also die Zeitfenster nicht vollständig ausfüllen müssen, vielmehr werden die Zeitfenstergrössen entsprechend der Nachrichtenlänge vorgegeben. ZFmax muss somit ausreichend Zeit bzw. Platz für die längste mögliche Nachricht, z.B.130 Bit bzw. Bitzeiten bieten und ZFmin kann an die kürzest mögliche Nachricht, z.B. 47 Bit, angepasst werden.

Generell ist das Zeitfenster der Zeitrahmen der für eine bestimmte Nachricht zur Verfügung steht (siehe Figur 3). Das Zeitfenster einer Nachricht wird mit dem Anliegen der Sendefreigabe geöffnet und der Beginn dieses Fensters stimmt prinzipiell mit einer definierten Zeitmarke überein. Die Länge des Zeitfensters wird aus i Segmenten mit beispielsweise 32 Bitzeiten (vgl Block 304a) bestimmt. Die Segmentierung zu insbesondere 32 Bitzeiten stellt dabei eine HW-freundliche Größe dar. Das Zeitfenster darf nicht kürzer sein, als die längste in diesem Zeitfenster vorkommende Nachricht. Die Bitzeit ist insbesondere die nominale CAN-Bitzeit.

Das Sendefreigabeintervall oder Zeitfensterfreigabeintervall beschreibt den Zeitrahmen, innerhalb dessen mit dem Senden der Nachricht begonnen werden darf. Das Sendefreigabeintervall ist ein Teil des Zeitfensters. Die Freigabe liegt also im Intervall Zeitmarke und Zeitmarke plus Delta an. Der Wert Delta ist deutlich kleiner als die Länge des Zeitfensters (z.B. 16 oder 32 Bitzeiten für ZFF1 oder ZFF2). Eine Nachricht deren Beginn nicht innerhalb des Sendefreigabeintervalls liegt, darf nicht gesendet werden.

Figur 4 stellt nun einen Gesamtzyklus (Sendematrix) GZ2 dar. Gesamtzyklus (Sendematrix): Alle Nachrichten (RN, A bis F und Arbitrierend) aller Teilnehmer werden als Komponenten einer Sendematrix organisiert (siehe Figur 4). Die Sendematrix besteht aus einzelnen Basiszyklen BZ0a bis BZ7a. Alle Basiszyklen des Gesamtzyklus GZ2 haben die gleiche Struktur. Diese Basiszyklen können wahlweise aus exklusiven (A bis F) und arbitrierenden Komponenten aufgebaut sein. Die Gesamtzahl der Zeilen (also Basiszyklen BZ0a bis BZ7a) ist hier eine Zahl 2^{m} = 8 mit m = 3.

Ein Basiszyklus (Zeile der Sendematrix) beginnt mit einer Referenzmarke in der Referenznachricht RN und besteht aus mehreren (i) aufeinander folgenden Zeitfenstern definierter Länge (erstes Zeitfenster ZFO bzw. ZFRN für RN). Die Anordnung der Nachrichten innerhalb des Basiszyklus kann frei festgelegt werden. Ein Zeitfenster wird für exklusive Komponenten mit einem CAN Nachrichtenobjekt verknüpft. Ein Zeitfenster kann auch frei gelassen werden (409,421,441,417,445) oder für arbitrierende Komponenten genutzt werden (403, 427).

Eine Sendegruppe (Spalte der Sendematrix, A bis F) bilden Nachrichten, die immer im gleichen Zeitfenster, aber in unterschiedlichen Basiszyklen gesendet werden (siehe Figur 4). Somit kann eine Periode aufgebaut werden, z.B. A in ZF1a und ZF4a: 401,407,413,419,425,431,437,443 und 404,410,416,422,428,434,440,446. Innerhalb einer Sendegruppe kann ein Nachrichtenobjekt (eines Zeitfensters) mehrfach gesendet werden. Die Periode einer Nachricht innerhalb einer Sendegruppe muß eine Zahl 2¹ sein, wobei gilt: 1 <= m.

Das Nachrichtenobjekt bzw. die Nachricht entspricht dem Nachrichtenobjekt des Busses, insbesondere in CAN, und umfaßt den Identifier bzw. die Kennung sowie die Daten selbst. In TTCAN wird das Nachrichtenobjekt um wenigstens eine der folgenden Eintragungen, bevorzugter Weise um alle drei, in der Sendematrix ergänzt: Zeitfenster, Basismarke, Wiederholrate.

Das Zeitfenster ist die Position (ZFO, ZF1a bis ZF5a) im Basiszyklus (BZn, Zeile der Sendematrix). Der Beginn des Zeitfensters ist definiert durch Erreichen einer bestimmten Zeitmarke.

Die Basismarke gibt an, in welchem Basiszyklus (BZ0a bis BZ7a) im Gesamtzyklus die Nachricht erstmalig gesendet wird.

Die Wiederholrate definiert nach wievielen Basiszyklen diese Übertragung wiederholt wird.

Um die Gültigkeit eines Nachrichtenobjekts für den CAN-Controller zu kennzeichnen, gibt es ein "permanentes Senderequest", das eine permanente Freigabe des Objekts bedeutet (für exklusive Komponenten siehe unten) und ein "einzelnes Senderequest", das eine einmalige Gültigkeit des Objekts bedeutet (für arbitrierende Komponenten siehe unten).

Die automatische Retransmission aus CAN ist für die Nachrichten in TTCAN zweckmässigerweise ausgeschaltet.

Im weiteren wird nun nochmals die Nachrichtenübertragung - Periodische Nachrichten und Spontane Nachrichten im Basiszyklus bzw. im Gesamtzyklus, insbesondere bezüglich der Applikation, beschrieben. Dabei werden wieder exklusive Nachrichten also periodische Nachrichten.und arbitrierende also spontane Nachrichten unterschieden.

### Exklusive Nachrichtenobjekte (periodische Nachrichten):

Exklusive Nachrichtenobjekte werden gesendet, wenn der Applikationswatchdog gesetzt ist, die "permanente Sendeanforderung" der Applikation an den CAN-Controller gesetzt ist und das Sendefreigabeintervall des zugehörigen Zeitfensters geöffnet ist. In diesem Fall stimmt die Zeitmarke für das Nachrichtenobjekt mit der Relativen Zeit überein. Die permanente Sendeanforderung bleibt gesetzt, bis sie von der Applikation selbst zurückgesetzt wird.

### Arbitrierende Nachrichtenobjekte (spontane Nachrichten):

Arbitrierende Nachrichtenobjekte werden gesendet, wenn der Applikationswatchdog gesetzt ist, die "einzelne Sendeanforderung" von der Applikation an den CAN-Controller gesetzt ist und das Sendefreigabeintervall des nächsten dafür bestimmten Zeitfensters geöffnet ist. Dann ist die Zeitmarke für dieses Zeitfenster gleich der Relativen Zeit. Die Sendeanforderung wird nach erfolgreichem Senden vom CAN-Controller zurückgesetzt. Der gleichzeitige Zugriff verschiedener spontaner Nachrichten wird über die Bitarbitrierung von CAN geregelt. Verliert eine spontane Nachricht in diesem Zeitfenster gegen eine andere spontane Nachricht, so kann sie erst im nächsten dafür bestimmten Zeitfenster wieder um den Buszugang kämpfen.

Wird die gesamte Sendematrix bzw. der Gesamtzyklus durchlaufen, so ergibt sich eine zyklische, zeitgesteuerte Nachrichtenübertragung. Zeitgesteuert bedeutet, daß jede Aktion vom Erreichen eines bestimmten Zeitpunkts ausgeht (siehe Zeitmarken und Relative Zeit). Ist der Gesamtzyklus vollständig durchlaufen, d.h. alle Basiszyklen wurden einmal abgearbeitet, so wird wieder mit dem ersten Basiszyklus der Sendematrix begonnen. Es entstehen keine zeitlichen Lücken im Übergang. Ein Überblick eines solchen zeitgesteuerten Kommunikationssystems mit Zeitgeber ist in der Beschreibung und den Figuren der Zeichnung dargestellt worden.

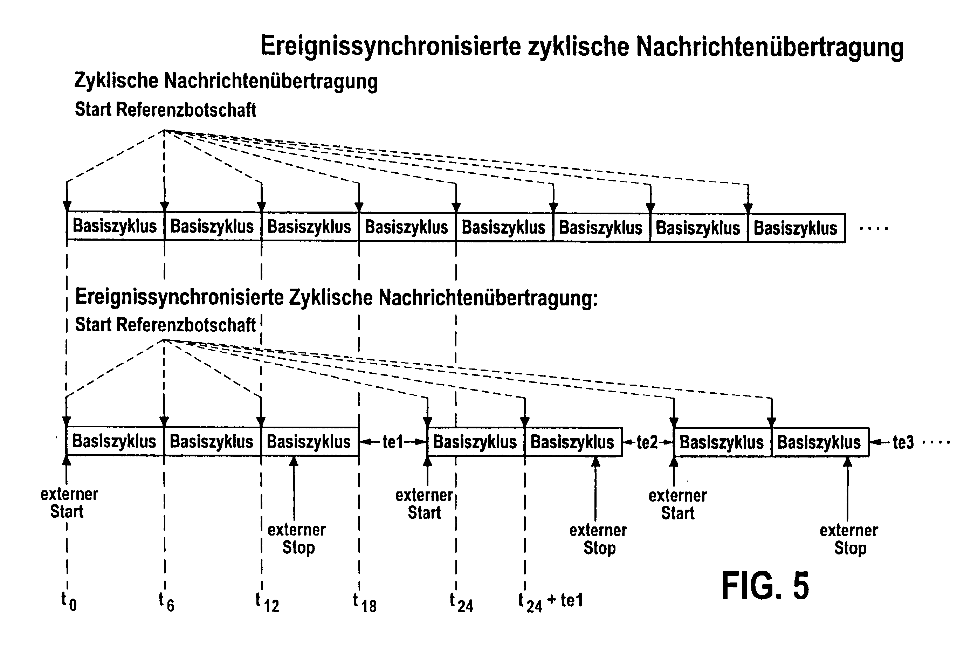

Figur 5 zeigt in einer Gegenüberstellung eine zyklische Nachichtenübertragung gemäß den Figuren 2 und 4 und die ereignissynchronisiertezyklische Nachrichtenübertragung. Dabei sind die Zeitpunkte des starts eines Basiszyklus mit t0, t6, t12, t18, t24 bzw. t24+tel bezeichnet. Die te1, te2 und te3 stellen die Unterbrechungszeiten durch die Ereignissynchronisation dar. Die Begriffe Zeitreferenznachricht, Referenznachricht, Referenzbotschaft und Zeitreferenzbotschaft sind dabei gleichbedeutend.

Ein zeitlich determinierter Kommunikationsablauf soll mit externen Ereignissen der Applikation abgestimmt werden. Beispiel ist die winkelsynchrone Verarbeitung der Meßwerte in der Motorsteuerung, die über ein zeitgesteuertes Kommunikationssystem erfaßt werden.

Zeitlich determinierte Kommunikationssysteme lassen einen vorherbestimmbaren Ablauf der Prozesse zu. Es ist deshalb möglich, die Applikation mit der Kommunikation in einem engeren Zeitbereich als in einem arbitrierenden System zu synchronisieren. Bei einer rein zyklisch ablaufenden Kommunikation ist aber die Applikation starr an das zeitliche Raster gebunden. Im Falle des Beispiels einer Motorsteuerung sind hingegen zeitlich veränderliche, der Dynamik der Drehzahländerung angepaßte Meßwertübertragungen nötig. Dies kann erreicht werden, indem der zyklische Kommunikationsablauf unterbrechbar ist und auf ein externes Ereignis hin definiert wieder gestartet werden kann.

Ein Kommunikations- (TTCAN-) Controller, der Zeitgeber ist, wird in die Lage versetzt, auf eine Anforderung insbesondere der Applikation hin, die zyklische Kommunikation am Ende eines Basiszyklus zu unterbrechen und bei Eintreffen eines Start-Signals bzw. Start-Anforderung der Applikation die Kommunikation mit einem neuen Basiszyklus wieder aufzunehmen. Abhängig davon, ob die Unterbrechungsanforderung bzw. Stop-Anforderung bestehen bleibt oder zurückgenommen wurde, wird nur ein Basiszyklus ausgeführt oder die zyklische Kommunikation so lange fortgesetzt, bis wieder eine Unterbrechungsanforderung kommt. Unabhängig zu welchem Zeitpunkt innerhalb eines Basiszyklus die Anforderung kommt, wird dieser zu Ende geführt. Folgt nach der Unterbrechungsanforderung noch innerhalb des gleichen Basiszyklus ein Start-Signal, so wird die Kommunikation nicht unterbrochen.

Für eine eindeutige Zuordnung von externem Ereignis und Kommunikation sollte der Abstand vorteilhafterweise zwischen zwei externen Ereignissen größer oder gleich der Länge eines Basiszyklus sein oder ein Basiszyklus kleiner als der minimale externe Synchronisationsabstand.

Die Überwachung durch einen Watchdog, der die Referenzbotschaft erwartet, sollte zweckmässigerweise auf die maximale Länge der Lücke zwischen den Basiszyklen abgestimmt werden.

## Patentansprüche

1. Verfahren zum Austausch von Daten in Nachrichten zwischen wenigstens zwei Teilnehmern (101-105), welche mittels eines Bussystems (100) verbunden sind, wobei die, die Daten enthaltenden Nachrichten (N1, N2) durch die Teilnehmer (101-105) über das Bussystem (100) übertragen werden und die Nachrichten (N1, N2) durch einen ersten Teilnehmer (101) zeitlich derart gesteuert werden, dass der erste Teilnehmer wiederholt eine Referenznachricht (RN) in wenigstens einem vorgebbaren zeitlichen Abstand über den Bus (100) überträgt und der zeitliche Abstand in Zeitfenster (ZF1-ZF5) vorgebbarer Länge unterteilt wird, wobei die Nachrichten (N1, N2) in den Zeitfenstern (ZF1-ZF5) übertragen werden, **dadurch gekennzeichnet, dass** eine Referenznachricht (RN) und die nachfolgenden Zeitfenster (ZF1-ZF5) bis zur nächsten Referenznachricht zu einem von mehreren ersten Zyklen (BZ0-BZ3) zusammengefasst werden und durch eine Stop-Anforderung die Übertragung am Ende eines dieser ersten Zyklen (BZ0-BZ3) unterbrochen wird.

2. Verfahren nach Anspruch 1, **dadurch gekennzeichnet, dass** die Stop-Anforderung durch den ersten Teilnehmer (101) erzeugt wird.

3. Verfahren nach Anspruch 1, **dadurch gekennzeichnet, dass** der erste Teilnehmer (101) bei einer Start-Anforderung einen der ersten Zyklen (BZ0-BZ3) einleitet.

4. Verfahren nach Anspruch 1, **dadurch gekennzeichnet, dass** für einen dieser ersten Zyklen (BZ0-BZ3) eine Struktur vorgegeben werden kann, wobei die Struktur eines dieser ersten Zyklen durch die Dauer, Anzahl und zeitliche Position der auf die Referenznachricht (RN) folgenden Zeitfenster (ZF1-ZF5) vorgegeben wird.

5. Verfahren nach Anspruch 1 oder 4, **dadurch gekennzeichnet, dass** mehrere dieser ersten Zyklen (BZ0-BZ3) mit gleicher vorgegebener Struktur zu wenigstens einem zweiten Zyklus (GZ1) zusammengefasst werden.

6. Verfahren nach Anspruch 5, **dadurch gekennzeichnet, dass** in dem wenigstens einen zweiten Zyklus (GZ1) auch Nachrichten übertragen werden mit einem zeitlichen Abstand zwischen diesen Nachrichten, der größer ist als die zeitliche Länge von einem dieser ersten Zyklen (ZF1-ZF5), die zu dem weningstens einen zweiten Zyklus (GZ1) zusammengefasst sind.

7. Verfahren nach Anspruch 1 **dadurch gekennzeichnet, dass** die Stop-Anforderung von einer bezüglich des Bussystems (100) externen Vorrichtung erfolgt, welche zu diesem Zweck mit dem ersten Teilnehmer (101) in Verbindung steht.

8. Verfahren nach Anspruch 3, **dadurch gekennzeichnet dass** die Start-Anforderung von einer bezüglich des Bussystems (100) externen Vorrichtung erfolgt, welche zu diesem Zweck mit dem ersten Teilnehmer (101) in Verbindung steht.

9. Verfahren nach Anspruch 1, 2, oder 3, **dadurch gekennzeichnet, dass** der wenigstens zweite Teilnehmer (102-105) zur Applikation eingesetzt wird.

10. Verfahren nach Anspruch 7 oder 8, **dadurch gekennzeichnet, dass** die externe Vorrichtung zur Applikation eingesetzt wird.

11. Verfahren nach Anspruch 5 oder 6, **dadurch gekennzeichnet, dass** in wenigstens einem Zeitfenster des ersten oder des zweiten Zyklus eine zyklische Nachrichtenübertragung unterbleibt und in diesem Zeitfenster arbitrierende Nachrichten übertragen

12. Vorrichtung mit einem ersten Teilnehmer (101) eines Bussystems (100) zum Austausch von Daten in Nachrichten (N1, N2) zwischen wenigstens zwei Teilnehmern (101-105), welche mittels des Bussystems (100) verbunden sind, wobei die, die Daten enthaltenden Nachrichten (N1, N2) durch die Teilnehmer über das Bussystem übertragen werden und die Nachrichten (N1, N2) durch den ersten Teilnehmer (101) zeitlich gesteuert werden und der erste Teilnehmer derart ausgebildet ist, dass dieser wiederholt eine Referenznachricht (RN) in wenigstens einem vorgebbaren zeitlichen Abstand über den Bus (100) überträgt und die Vorrichtung derart ausgebildet ist, dass der zeitliche Abstand in Zeitfenster (ZF1-ZF5) vorgebbarer Länge unterteilt wird und die Nachrichten (N1, N2) in den Zeitfenstern (ZF1-ZF5) übertragen werden, **dadurch gekennzeichnet, dass** die Vorrichtung weiterhin derart ausgebildet ist, dass eine Referenznachricht (RN) und die nachfolgenden Zeitfenster (ZF1-ZF5) bis zur nächsten Referenznachricht zu einem von mehreren ersten Zyklen (BZ0-BZ3) zusammengefasst werden und durch eine Stop-Anforderung die Übertragung am Ende eines dieser ersten Zyklen (BZ0-BZ3) unterbrochen wird.

13. Vorrichtung nach Anspruch 12, **dadurch gekennzeichnet, dass** der erste Teilnehmer (101) derart ausgebildet ist, dass dieser bei einer Start-Anforderung einen der ersten Zyklen (BZ0-BZ3) einleitet.

14. Bussystem mit einer Vorrichtung nach Anspruch 12.

## Claims

1. Method for interchanging data in messages between at least two subscribers (101-105) which are connected by means of a bus system (100), the messages (N1, N2) which contain the data being transmitted by the subscribers (101-105) via the bus system (100), and the messages (N1, N2) being temporally controlled by a first subscriber (101) in such a manner that the first subscriber repeatedly transmits a reference message (RN) in at least one prescribable interval of time via the bus (100) and the interval of time is subdivided into time windows (ZF1-ZF5) of a prescribable length, the messages (N1, N2) being transmitted in the time windows (ZF1-ZF5), **characterized in that** a reference message (RN) and the following time windows (ZF1-ZF5) until the next reference message are combined to form one of a plurality of first cycles (BZO-BZ3), and transmission is interrupted at the end of one of these first cycles (BX0-BZ3) using a stop request.

2. Method according to Claim 1, **characterized in that** the stop request is generated by the first subscriber (101).

3. Method according to Claim 1, **characterized in that** the first subscriber (101) initiates one of the first cycles (BZ0-BZ3) in the event of a start request.

4. Method according to Claim 1, **characterized in that** a structure can be prescribed for one of these first cycles (BZO-BZ3), the structure of one of these first cycles being prescribed by the duration, number and temporal position of the time windows (ZF1-ZF5) which follow the reference message (RN).

5. Method according to Claim 1 or 4, **characterized in that** a plurality of these first cycles (BZ0-BZ3) having the same prescribed structure are combined to form at least one second cycle (GZ1).

6. Method according to Claim 5, **characterized in that** messages are also transmitted in the at least one second cycle (GZ1) with an interval of time between these messages which is greater than the temporal length of one of these first cycles (BZ0-BZ3) which have been combined to form at least one second cycle (GZ1).

7. Method according to Claim 1, **characterized in that** the stop request is provided by an apparatus which is external to the bus system (100) and is connected to the first subscriber (101) for this purpose.

8. Method according to Claim 3, **characterized in that** the start request is provided by an apparatus which is external to the bus system (100) and is connected to the first subscriber (101) for this purpose.

9. Method according to Claim 1, 2 or 3, **characterized in that** the at least second subscriber (102-105) is used for the application.

10. Method according to Claim 7 or 8, **characterized in that** the external apparatus is used for the application.

11. Method according to Claim 5 or 6, **characterized in that**, in at least one time window of the first or second cycle, the messages are not transmitted cyclically and messages which arbitrate in this time window are transmitted.

12. Apparatus having a first subscriber (101) of a bus system (100) for interchanging data in messages (N1, N2) between at least two subscribers (101-105) which are connected by means of the bus system (100), the messages (N1, N2) which contain the data being transmitted by the subscribers via the bus system, and the messages (N1, N2) being temporally controlled by the first subscriber (101), and the first subscriber being designed in such a manner that it repeatedly transmits a reference message (RN) in at least one prescribable interval of time via the bus (100), and the apparatus being designed in such a manner that the interval of time is subdivided into time windows (ZF1-ZF5) of a prescribable length and the messages (N1, N2) are transmitted in the time windows (ZF1-ZF5), **characterized in that** the apparatus is also designed in such a manner that a reference message (RN) and the following time windows (ZF1-ZF5) until the next reference message are combined to form one of a plurality of first cycles (BZO-BZ3), and transmission is interrupted at the end of one of these first cycles (BZO-BZ3) using a stop request.

13. Apparatus according to Claim 12, **characterized in that** the first subscriber (101) is designed in such a manner that it initiates one of the first cycles (BZ0-BZ3) in the event of a start request.

14. Bus system having an apparatus according to Claim 12.

## Revendications

1. Procédé d'échange de données dans des messages entre au moins deux abonnés (101-105) reliés par un système de bus (100), les messages (N1, N2) contenant des données étant transmis par les abonnés (101-105) via le système de bus (100), et dont les messages (N1, N2) sont commandés dans le temps par un premier abonné (101) de façon telle que ce dernier transmet via le bus (100) de manière répétée un message de référence (RN) dans au moins un intervalle de temps donné, cet intervalle de temps étant divisé en fenêtres de temps (ZF1-ZF5) d'une longueur donnée, et les messages (N1, N2) étant transmis dans les fenêtres (ZF1-ZF5),
**caractérisé en ce qu'**
un message de référence (RN) et les fenêtres suivantes (ZF1-ZF5) jusqu'au message de référence suivant sont regroupés en un cycle parmi plusieurs premiers cycles (BZ0-BZ3), et la transmission est interrompue par une demande d'arrêt à la fin d'un de ces premiers cycles (BZ0-BZ3).

2. Procédé selon la revendication 1,
**caractérisé en ce que**
la demande d'arrêt est générée par le premier abonné (101).

3. Procédé selon la revendication 1,
**caractérisé en ce que**
le premier abonné (101) introduit l'un des premiers cycles (BZO-BZ3) lors d'une demande de démarrage.

4. Procédé selon la revendication 1,
**caractérisé en ce qu'**
une structure peut être donnée pour l'un de ces premiers cycles (BZO-BZ3), la structure d'un de ces premiers cycles étant définie par la durée, le nombre et la position temporelle de la fenêtre (ZF1-ZF5) suivant le message de référence (RN).

5. Procédé selon la revendication 1 ou 4,
**caractérisé en ce que**
plusieurs de ces premiers cycles (BZO-BZ3) sont regroupés en au moins un deuxième cycle (GZ1) avec la même structure donnée.

6. Procédé selon la revendication 5,
**caractérisé en ce que**
dans l'au moins un deuxième cycle (GZ1) des messages sont également transmis avec un intervalle temporel entre ces messages supérieur à la longueur temporelle d'un de ces premiers cycles (ZF1-ZF5) regroupés en au moins un deuxième cycle (GZ1).

7. Procédé selon la revendication 1,
**caractérisé en ce que**
la demande d'arrêt est effectuée par un dispositif externe par rapport au système de bus (100) et relié à cet effet au premier abonné (101).

8. Procédé selon la revendication 3,
**caractérisé en ce que**
la demande de démarrage est effectuée par un dispositif externe par rapport au système de bus (100) et relié à cet effet au premier abonné (101).

9. Procédé selon la revendication 1, 2 ou 3,
**caractérisé en ce que**
l'au moins un deuxième abonné (102-105) est employé pour l'application.

10. Procédé selon la revendication 7 ou 8,
**caractérisé en ce que**
le dispositif externe est employé pour l'application.

11. Procédé selon la revendication 5 ou 6,
**caractérisé en ce qu'**
il manque une transmission cyclique de message dans au moins une fenêtre du premier ou du deuxième cycle et **en ce que** des messages arbitraires sont transmis dans cette fenêtre.

12. Dispositif doté d'un premier abonné (101) d'un système de bus (100) pour l'échange de données dans des messages (N1, N2) entre au moins deux abonnés (101-105) reliés par le système de bus (100), les messages (N1, N2) contenant des données étant transmis par les abonnés via le système de bus et les messages (N1, N2) étant commandés dans le temps par le premier abonné (101) pour qu'il transmette de manière répétée un message de référence (RN) dans au moins un intervalle de temps donné via le bus (100), et le dispositif étant conçu pour que l'intervalle de temps soit divisé en fenêtres de temps (ZF1-ZF5) d'une longueur donnée et que les messages (N1, N2) soient transmis dans les fenêtres (ZF1-ZF5),
**caractérisé en ce qu'**
un message de référence (RN) et les fenêtres suivantes (ZF1-ZF5) jusqu'au message de référence suivant sont regroupés en un cycle parmi plusieurs premiers cycles (BZO-BZ3), et la transmission est interrompue par une demande d'arrêt à la fin d'un de ces premiers cycles (BZO-BZ3).

13. Dispositif selon la revendication 12,
**caractérisé en ce que**
le premier abonné (101) est conçu de manière à introduire l'un des premiers cycles (BZO-BZ3) lors d'une demande de démarrage.

14. Système de bus doté d'un dispositif selon la revendication 12.
